(19) Europäisches Patentamt
European Patent Office
Office européen des brevets

(11) **EP 3 075 480 B1**

(12) **EUROPÄISCHE PATENTSCHRIFT**

(45) Veröffentlichungstag und Bekanntmachung des Hinweises auf die Patenterteilung:
**14.08.2019 Patentblatt 2019/33**

(51) Int Cl.:
***B23D 61/02*** *(2006.01)*

(21) Anmeldenummer: **16162664.3**

(22) Anmeldetag: **29.03.2016**

(54) **KREISSÄGEBLATT MIT GRUPPENVERZAHNUNG**

CIRCULAR SAW BLADE WITH GROUP TOOTHING

LAME DE SCIE CIRCULAIRE COMPRENANT UNE DENTURE DE GROUPES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.04.2015 DE 102015004182**

(43) Veröffentlichungstag der Anmeldung:
**05.10.2016 Patentblatt 2016/40**

(73) Patentinhaber: **Leitz GmbH & Co. KG**
**73447 Oberkochen (DE)**

(72) Erfinder:
• **Kisselbach, Andreas**
**73431 Aalen (DE)**
• **Uhl, Ansgar**
**73485 Unterschneidheim (DE)**
• **Werner, Karin**
**73466 Röttingen (DE)**

(74) Vertreter: **Friedrich, Andreas**
**Gramm, Lins & Partner**
**Patent- und Rechtsanwälte PartGmbB**
**Theodor-Heuss-Straße 1**
**38122 Braunschweig (DE)**

(56) Entgegenhaltungen:
**DE-U1- 20 021 919    US-A1- 2008 257 127**

**Beschreibung**

Die Erfindung betrifft ein Kreissägeblatt mit über seinem Umfang in Gruppen angeordneten Schneidzähnen, bei dem jede Gruppe mindestens drei Schneidzähne umfasst, von denen in Schnittfolge der erste Zahn in der Vorderansicht symmetrisch und die zweiten und dritten Zähne wechselseitig asymmetrisch ausgebildet sind und bei dem zwischen den Schneidkanten des ersten und des zweiten Zahnes ein erster Teilungswinkel, zwischen den Schneidkanten des zweiten und des dritten Zahnes ein zweiter Teilungswinkel und zwischen dem letzten Zahn einer ersten Gruppe und dem ersten Zahn einer nachfolgenden Gruppe ein dritter Teilungswinkel eingestellt ist.

Ein solches Kreissägeblatt ist beispielsweise aus der DE 200 21 919 U1 bekannt. Die Zähne sind in Umfangsrichtung zueinander beabstandet und der Teilungswinkel bezieht sich auf die Umfangsrichtung. Wechselseitig asymmetrisch ausgebildete Zähne sind Wechselzähne, die als Schrägzähne ausgebildet sind. Ihre radial außenliegenden Ecken sind angefast und der Zahn mit dem symmetrischen Querschnitt ist der Räumzahn. Mit diesem Kreissägeblatt sollen Schnittgüte, Schnittgeschwindigkeit und Standwege beim Sägen von Holz, Holzwerkstoffen, Kunststoffen und Nichteisenmetallen verbessert werden. Die Fasen an den Wechselzähnen bewirken zum einen eine gegenüber Ausbrüchen stabile Geometrie und zum anderen, dass sich die axialen Schnittkraftkomponenten an jedem Zahn völlig aufheben, wodurch jeder Zahn (Schneidzahn) für sich gut geführt ist. Hierbei müssen die Wechselzähne natürlich geeignet ausgestaltet werden. Durch die Fasen haben die Wechselzähne eine größere Kontaktlänge mit dem Span, wodurch in Verbindung mit der Spanstauchung die Schnittkräfte höher sind als bei einem Wechselzahn ohne Fase.

Die DE 201 21 039 U1 offenbart ein Kreissägeblatt, mit in Gruppen angeordneten Schneidzähnen, wobei jeweils der in Drehrichtung (Schneidrichtung) erste Zahn einer Gruppe mit seiner Schneide radial weiter nach außen ragt als der oder die Folgezähne der Gruppe. Bei stak spanenden Werkstoffen soll dadurch erreicht werden, dass die entstehenden Sägespäne möglichst rasch aus dem Schnittbereich herausbefördert werden, um ein Verklemmen des Sägeblatts im Werkstück und/oder eine Beeinträchtigung des Schnittergebnisses zu verhindern. Die ersten Schneidzähne einer Gruppe bearbeiten das Werkstück spanend, während die nachfolgenden Zähne in erster Linie dem Ausräumen der entstandenen Späne und der Schnittglättung dienen. Hierzu weisen die ersten Zähne bevorzugt eine trapezförmige Schneide mit seitlichen Fasen auf. Die nachfolgenden Zähne können ebenfalls ein- oder beidseitig mit Fasen versehen sein. Es ist allgemein bekannt, dass die Trapezform bei Zähnen hohe Schnittkräfte bewirkt, weil die an den Fasen und an der Umfangsschneide entstehenden Späne gegeneinander fließen, gestaucht werden und einen hohen Schnittdruck in der Schnittfuge entstehen lassen.

In der US 2008/0257127 A1 wird ein Kreissägeblatt mit wechselseitig asymmetrisch ausgebildeten Zähnen beschrieben, zwischen denen über den Umfang verteilt in der Vorderansicht symmetrisch ausgebildete Zähne (Flachzähne) angeordnet sein können. Der Abstand zwischen einem Flachzahn und dem nachfolgenden asymmetrischen Zahn kann größer ausgebildet sein als der Abstand zwischen den asymmetrischen Zähnen und der Abstand zwischen dem Flachzahn und dem letzten, dem Flachzahn vorgeordneten asymmetrischen Zahn. Die asymmetrischen Zähne können dadurch bezogen auf die Flachzähne in Gruppen angeordnet werden. Der Teilungswinkel zwischen den asymmetrischen Zähnen einer Gruppe und dem dieser Gruppe nachfolgenden Flachzahn ist identisch.

Die DE 20 2013 102 004 U1 beschreibt ein Kreissägeblatt mit über seinem Umfang angeordneten Zähnen in Gruppen, bei dem der Abstand zweier hintereinander folgender Zahngruppen 1,5-fach bis 2,5-fach so groß ist wie der Abstand der hintereinander folgenden Zähne innerhalb einer Gruppe. Mit dieser Ausbildung soll beim gleichzeitigen Sägen von mehreren übereinanderliegenden Platten eine deutlich höhere Standzeit der Sägeblätter erreicht werden, weil durch eine verbesserte Spanaufnahme in der Lücke zwischen Zahngruppen die Mehrfachzerspanung verringert werden soll. Jede Gruppe weist einen Schneidzahn einer ersten Art und einen Schneidzahn zweiter Art auf, wodurch die reibungsfreie Bildung des Spanes im Schnittspalt am gesamten Sägeblatt erreicht werden soll. Dabei kann zumindest eine Gruppe hintereinander abwechselnd einen Schneidzahn erster Art und einen Schneidzahn zweiter Art aufweisen, was das Verklemmen von Spänen in der Schnittfuge verhindern soll.

In der DE 200 21 919 U1 ist ein Kreissägeblatt mit auf dem Umfang angeordneten Sägezähnen beschrieben, die eine hohlgeformte Sägezahnbrust aufweisen und die Sägezähne sich in wiederholenden Zahngruppen, bestehend aus mindestens drei unterschiedlichen Zähnen, angeordnet sind. Die Zahngruppe besteht aus einem in Schneidrichtung voraneilenden Flachzahn und diesem folgenden asymmetrischen Wechselzähnen. Mit dieser Ausbildung soll eine hohe Schnittgüte erzeugt werden, die über einen längeren Zeitraum beibehalten wird und zu dem hohe Vorschubgeschwindigkeiten ermöglicht.

Von diesem Stand der Technik ausgehend, liegt der Erfindung die Aufgabe zugrunde, das bekannte Kreissägeblatt so zu verbessern, dass es für ein breites Spektrum an Werkstoffen, insbesondere aus dem Bereich Holz, Holzwerkstoffe, Kunststoffe und Nichteisenmetalle sowie Verbundmaterialien aus diesen Werkstoffen universell einsetzbar ist und mit ihm eine hohe Schnittqualität bei gleichzeitig geringer Antriebsleistung erzielt werden kann.

Zur Lösung der Aufgabe zeichnet sich ein gattungsgemäßes Kreissägeblatt dadurch aus, dass die asymmetrischen Zähne zu einem ersten Zahnpaar zusammengefasst sind, und der zweite Teilungswinkel kleiner ist als der erste Teilungswinkel, und dass der zweite Teilungswinkel kleiner ist als der dritte Teilungswinkel.

Durch diese Ausgestaltung wird eine Gruppe von Schneidzähnen aus mindestens zwei rechts/links alternierenden Schrägzähnen (= wechselseitig asymmetrisch) und einem symmetrisch ausgebildeten Räumzahn gebildet. Der Zahnabstand innerhalb eines Wechselzahnpaares ist kleiner als der Abstand zum benachbarten Räumzahn. Bei einer Zahnfolge aus symmetrischen und wechselseitig asymmetrischen Zähnen entstehen unterschiedliche Abstände zwischen den qualitätsbildenden Schneidenecken der Zähne. Durch den kleineren Abstand innerhalb eines Wechselzahnpaares wird dieser Unterschied geringer, wodurch der qualitätsbestimmende größte Abstand zwischen den aufeinanderfolgenden qualitätsbildenden Schneidenecken der Zähne kleiner ist, als wenn alle Zähne regelmäßig zueinander beabstandet wären (regelmäßige Zahnteilung).

Bevorzugt weist jede Gruppe mindestens ein zweites aus asymmetrischen vierten und fünften Zähnen gebildetes Zahnpaar auf, und insbesondere vorzugsweise ist ein vierter Teilungswinkel zwischen dem vierten und fünften Zahn genauso groß wie der zweite Teilungswinkel zwischen dem zweiten und dritten Zahn (jeweils bezogen auf die Schneidkante).

Geht man von der gleichen Anzahl Zähnen eines Sägeblattes aus, so sind die qualitätsbestimmenden Zahnabstände bzw. Zahnvorschübe des erfindungsgemäßen Kreissägeblattes kleiner als der größte qualitätsbestimmende Zahnabstand bzw. Zahnvorschub eines vergleichbaren Kreissägeblattes mit regelmäßiger Zahnteilung. Der größte Abstand zweier aufeinanderfolgender qualitätsbildender Zähne ist bei dem erfindungsgemäßen Kreissägeblatt geringer als bei einem vergleichbaren Kreissägeblatt mit regelmäßiger Zahnteilung. Bei identischem Anspruch an die Schnittqualität, das heißt bei gleichem größten Abstand aufeinanderfolgender qualitätsbildender Zähne, kann die Zähnezahl bei dem erfindungsgemäßen Kreissägeblatt reduziert werden. Damit lassen sich die Schnittkräfte und der Energieverbrauch durch Verringerung der Zähnezahl reduzieren, ohne dabei eine Verschlechterung der Schnittqualität in Kauf nehmen zu müssen. Bei gleicher Zähnezahl wird eine Verbesserung der Schnittqualität erreicht, ohne dass dabei die Schnittkräfte bzw. der Energieverbrauch ansteigt.

Insbesondere für handgeführte Akku-Maschinen ist das erfindungsgemäß ausgestaltete Kreissägeblatt gut geeignet, weil mit ihm die Einsatzdauer des Akkus verlängert wird und das Kreissägeblatt gleichzeitig robust genug ist für den Einsatz auf einer handgeführten Maschine, was bekannte Kreissägeblätter mit verringerter Schnittbreite (sogenannte Dünnschnitt-Kreissägeblätter) nicht sind.

Der Teilungswinkel zwischen dem letzten Zahn des ersten Zahnpaares und dem ersten Zahn des nachfolgenden Zahnpaares ist vorzugsweise größer oder gleichgroß als der Teilungswinkel zwischen den Zähnen eines Zahnpaares. Dabei ist insbesondere der erste Zahn jeder Gruppe als Flachzahn oder als Hohlzahn ausgebildet.

Mindestens ein Zahn einer Gruppe weist vorzugsweise mindestens eine Fase mit einer axialen Fasenbreite auf, wobei die axiale Fasenbreite maximal ein Drittel der axialen Zahnbreite beträgt.

Bei einer bevorzugten Ausführungsform liegt der Fasenwinkel zwischen 0,5° und 45°, insbesondere zwischen 0,5° und 5°.

Die Spanfläche der asymmetrischen Zähne kann achsparallel verlaufen, sie kann einen Achswinkel aufweisen oder die asymmetrischen Zähne können als Hohlzähne ausgebildet sein.

Mit Hilfe einer Zeichnung sollen Ausführungsbeispiele der Erfindung nachfolgend näher erläutert werden. Es zeigen:

Figur 1 -     eine erste Ausführungsform eines Kreissägeblattes in der Seitenansicht;

Figur 2 -     das Kreissägeblatt nach Figur 1 in perspektivischer Teilansicht;

Figur 3 -     ein zweites Ausführungsbeispiel eines erfindungsgemäßen Kreissägeblattes in der Seitenansicht;

Figur 4 -     eine schematische Darstellung der Zahnfolgen verschiedener Kreissägeblätter mit gleicher Zähnezahl;

Figur 5 -     eine schematische Darstellung verschiedener Zahnprofilformen in der Schnittfuge (Spanflächenansicht).

Eine wichtige Größe für die Schnittqualität eines Kreissägeblattes 10 ist der sog. Zahnvorschub $f_z$, der sich aus Drehzahl n, Vorschubgeschwindigkeit $v_f$ und Zähnezahl Z des Werkzeugs errechnen lässt und die Spandicke bestimmt.

$$f_z = \frac{v_f}{n \cdot Z}$$

Diese Formel setzt eine regelmäßige Teilung zwischen den einzelnen Zähnen 1, 2, 3, ... voraus.
Bei einer unregelmäßigen Teilung zwischen den Zähnen 1, 2, 3, ... berechnet sich der jeweilige Zahnvorschub eines Zahns zu:

$$f_z = \frac{v_f}{n} \cdot \frac{\tau}{360°},$$

wobei $\tau$ der Teilungswinkel zu dem jeweils vorauseilenden Zahn ist.

Je größer ein Teilungswinkel $\tau$ ist, desto größer ist der Zahnvorschub $f_z$, und desto dicker sind die Späne. Die Schnittqualität nimmt mit der Dicke der Späne ab. Der größte Teilungswinkel $\tau$ innerhalb eines Sägeblattes 100 bestimmt die Schnittqualität.

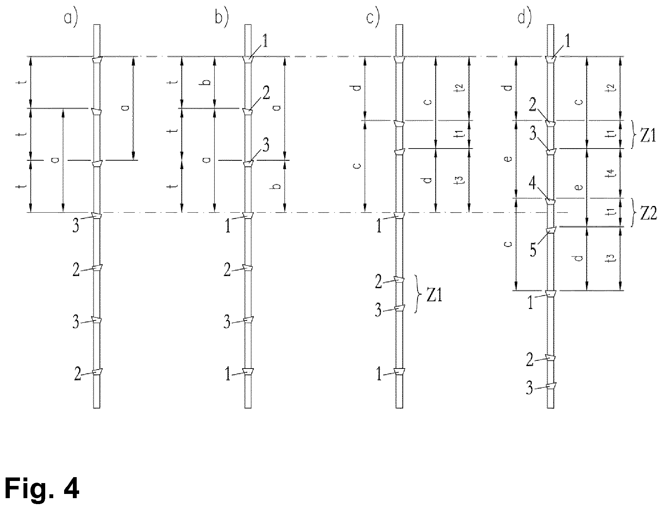

In Fig. 4 sind die Zahnfolgen (t, a, b, c, d, e) unterschiedlicher Kreissägeblätter 10 mit gleicher Zähnezahl n in abgewickelter Form schematisch dargestellt. Bei konstanter Drehzahl und konstantem Vorschub sind diese Zahnfolgen proportional zu dem Zahnvorschub $f_z$.

Beispiel a) zeigt die Zahnfolge eines Sägeblattes 100 mit reinen Wechselzähnen und regelmäßiger Zahnteilung. D. h. alle Zähne 1, 2, 3, ... folgen in einem regelmäßigem Abstand t aufeinander. Aufgrund der Wechselzähne ist für die Schnittqualität der doppelte Zahnabstand a = 2·t maßgebend. Unter "Wechselzähnen" wird eine alternierende Anordnung von Schrägzähnen verstanden, die abwechselnd axial innen und axial außen, also in Drehrichtung D abwechselnd rechts und links schnittbildend sind.

Beispiel b) zeigt die Zahnfolge eines Sägeblattes 100 mit einer 3er-Gruppenverzahnung aus je zwei Schrägzähnen 2, 3 und einem Flachzahn 1, ebenfalls mit regelmäßiger Zahnteilung bzw. mit in gleichmäßigem Abstand t aufeinander folgender Zähne 1, 2, 3, .... Hierbei variiert der für die Schnittqualität relevante Zahnabstand zwischen a = 2·t und b = t, was sich in einem unregelmäßigen Schnittbild äußert.

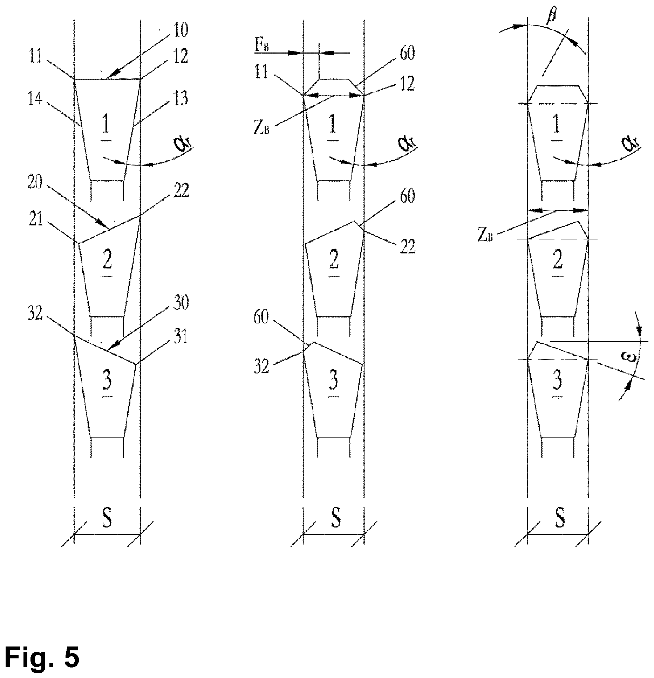

Beim Sägen wird die bearbeitete Fläche immer von dem axial am weitesten hervorstehenden Bereich eines Zahns 1, 2, 3 erzeugt. Da ein typischer Sägezahn einen radialen Freiwinkel $\alpha_r$ (vgl. Figur 5) besitzt, laufen die sich axial gegenüberliegenden Zahnflanken 13, 14 nach radial innen aufeinander zu, wodurch sich die Schnittbreite des Zahns 1, 2, 3 nach radial innen verringert. Bei einem in der Spanflächenansicht asymmetrischen Zahn 2, 3 liegt die radial innere Ecke 21, 31 der Schneidkante (20, 30) axial etwas zurückgesetzt gegenüber der radial äußeren Ecke 22, 32. Bei der Wechselzahnanordnung sind immer nur die radial äußeren Ecken 22, 32 der Zähne 2, 3 qualitätsbildend. Die jeweilige Schnittfläche (Oberfläche) rechts oder links vom Sägeschnitt S wird demnach nur von jedem zweiten Zahn gebildet. Eine Verbesserung dieser Situation kann zum Beispiel durch eine Gruppenverzahnung erreicht werden, in dem die asymmetrischen Schrägzähne 2, 3 mit Flachzähnen 1 kombiniert werden. Der Flachzahn 1 hat ein symmetrisches Profil und wirkt an beiden Ecken 13, 14 seiner Schneide 10 qualitätsbildend. Da ein Flachzahn 1 axial beidseitig qualitätsbildend ist, ersetzt er gewissermaßen zwei rechts/links alternierende Schrägzähne 2, 3 (Wechselzähne), wodurch ein Kreissägeblatt 100 mit einer Kombination aus Wechselzähnen 2, 3 und Flachzähnen 1 prinzipiell mit einer geringeren Zähneanzahl ausgeführt werden kann als ein Kreissägeblatt 100, das ausschließlich über Wechselzähne verfügt.

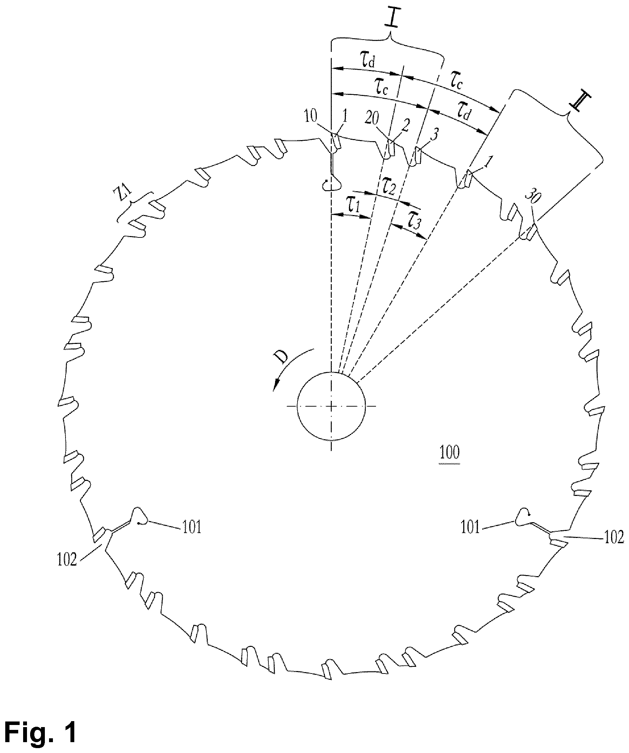

Figur 1 zeigt eine erste Ausführungsform eines Kreissägeblattes 100 mit einer Mehrzahl von zu Gruppen I, II zusammengefassten Zähnen 1, 2, 3. Der bezogen auf die Schnittfolge erste Zahn 1 ist symmetrisch als Flachzahn oder Hohlzahn mit zwei axial gegenüberliegenden Ecken 11, 12 der Schneide 10 ausgebildet. Unter "Schnittfolge" ist die Reihenfolge der Zähne bei der Schnittbildung zu verstehen. Wenn die Drehrichtung D entgegen dem Uhrzeigersinn ist, ist die Schnittfolge im Uhrzeigersinn. In Figur 1 taucht also zuerst ein erster Zahn 1, dann ein zweiter Zahn 2, ein dritter Zahn 3 und dann wieder ein erster Zahn 1 usw. in das - hier nicht dargestellte - Werkstück ein. Im Abstand von dem ersten Teilungswinkel $\tau_1$ folgt auf die Schneide 10 die Schneide 20 des ersten Schrägzahnes 2, dem die Schneide 30 des zweiten Schrägzahnes 3 im Teilungswinkel $\tau_2$ folgt. Der Teilungswinkel $\tau_2$ zwischen den Schneiden bzw. Schneidkanten 20, 30 der Wechselzähne 2, 3 ist kleiner als der Teilungswinkel $\tau_1$ zwischen der Schneidkante 10 des Flachzahnes 1 und der Schneide 20 des ersten Schrägzahnes 2. Die Schneide 10 des ersten Flachzahnes 1 der zweiten Gruppe II schließt sich an die Schneide 30 des zweiten Wechselzahnes 3 der ersten Gruppe I im Teilungswinkel $\tau_3$ an. Der dritte Teilungswinkel $\tau_3$ ist größer als der zweite Teilungswinkel $\tau_2$. Wie die Figur 1 erkennen lässt, sind die Wechselzähne 2, 3 als ein Paar Z1 angeordnet. An einigen der dem ersten Zahn 1 zugeordneten Spanräume 102 können nach radial innen verlaufende Einschnitte, sogenannte Dehnschlitze 101, im Kreissägeblatt 100 vorgesehen sein.

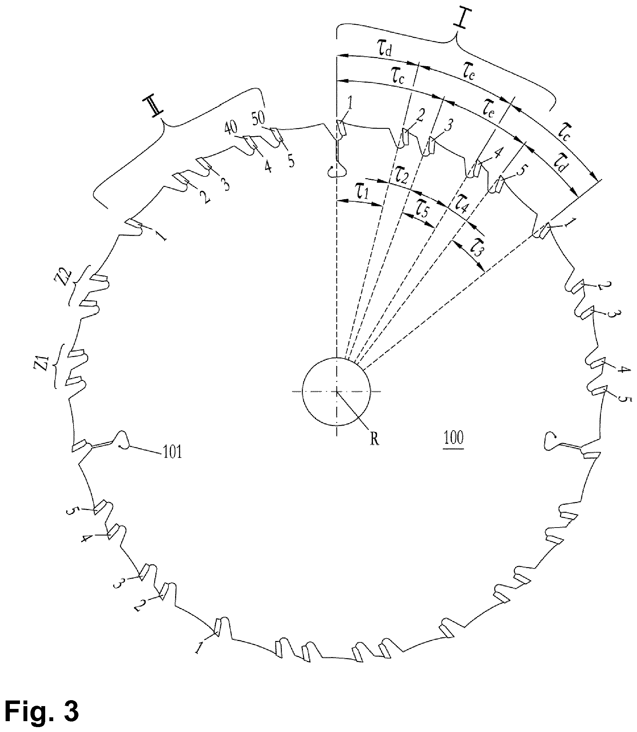

Figur 3 zeigt ein zweites Ausführungsbeispiel des erfindungsgemäßen Kreissägeblattes 100, bei dem zusätzlich zu dem aus den Wechselzähnen 2, 3 gebildeten ersten Zahnpaar Z1 ein aus zwei nachfolgenden Wechselzähnen 4, 5 gebildetes zweites Zahnpaar Z2 vorgesehen ist. Der zwischen den Zähnen 4, 5 ausgebildete Teilungswinkel $\tau_4$ ist identisch zu dem im ersten Zahnpaar Z1 zwischen den Wechselzähnen 2, 3 ausgebildete Teilungswinkel $\tau_2$. Der Tei-lungswinkel $\tau_5$ zwischen dem ersten Zahnpaar Z1 und dem zweiten Zahnpaar Z2 ist größer als der Teilungswinkel $\tau_2$, $\tau_4$ zwischen den Wechselzähnen 2, 3; 4, 5. Er kann aber auch identisch sein. Die Gruppen I, II sind auch in diesem Beispiel im Teilungswinkel $\tau_3$ anschließend. Die Teilungswinkel $\tau$ sind auf die Schneidkante bezogen.

Figur 5 zeigt verschiedene Ausgestaltungsmöglichkeiten der Zähne. Die in der linken Abbildung gezeigten Räumzähne 1 sind als Flachzähne und die Schrägzähne 2, 3 als Wechselzähne mit ebenen Span- und Freiflächen ausgeführt. Solche Zahnformen lassen sich einfach herstellen und sind leicht nachschärfbar. Die Spanflächen der Schrägzähne 2, 3 können auch mit einem Achswinkel ausgeführt sein, der zur qualitätsbildenden Seite hin voreilend ist (nicht gezeigt). Dadurch sind die Zähne 2, 3 an den Flanken schärfer, was die Schnittqualiät verbessert. Auch können die Spanflächen der Räumzähne 1 und/oder der Schrägzähne 2, 3 eine in radialer Richtung konkav verlaufende Spanfläche (nicht gezeigt) aufweisen (sogenannter Hohlschliff $\triangleq$ Hohlzahn). Dadurch sind alle Zähne an den Flanken schärfer ausgebildet, wodurch die Schnittqualität erhöht wird. Allerdings sind die Zähne aufgrund der sich ergebenden schlanken Winkel an ihren Flanken stärker ausbruchgefährdet.

Bei der in der mittleren Darstellung gezeigten Ausführungsform weisen die qualitätsbildenden Ecken 11, 12, 22, 32 Fasen 60 auf. Durch die Fasen 60 wird die Bruchgefahr der spitzen Ecken 11, 12, 22, 32 reduziert, was sich positiv auf die Standzeit des Sägeblattes 100 auswirkt. Die Breite $F_B$ der Fasen beträgt maximal ein Drittel der axialen Zahnbreite $Z_B$. Der Fasenwinkel $\beta$, gemessen zu einer Ebene senkrecht zur Rotationsachse R, liegt im Bereich zwischen 0,5° und 45°. Kleine Winkel $\beta$ verringern die sichtbaren Spuren der Zahneingriffe an den geschnittenen Werkstückflächen, große Winkel $\beta$ stabilisieren die Ecken 11, 12, 22, 32 besser gegen Ausbrüche. In einer bevorzugten Ausführungsform liegt der Fasenwinkel $\beta$ im Bereich zwischen 0,5° und 5°. Die Fasen 60 können auch gestuft (nicht gezeigt), also mit unterschiedlichen Winkeln innerhalb einer Fase ausgeführt, sein.

Bei dem in der rechten Abbildung der Figur 5 gezeigten Ausführungsform sind der Fasenwinkel $\beta$ und die Eckwinkel $\epsilon$ an den Zähnen 1, 2, 3 so gewählt, dass alle Zähne 1, 2, 3 dieselbe Zahnbreite $Z_B$ haben und damit der Breite des Sägeschnitts S entsprechen. Dadurch wird die effektive qualitätsbildende Anzahl der Zähne 1, 2, 3 maximal, wodurch die Qualität der Schnittbildung gesteigert wird. Die Wechselzähne 2, 3 arbeiten an der Umfangsschneide dennoch alternierend und bewirken einen Spanbruch, wodurch die Schnittkräfte gering gehalten werden.

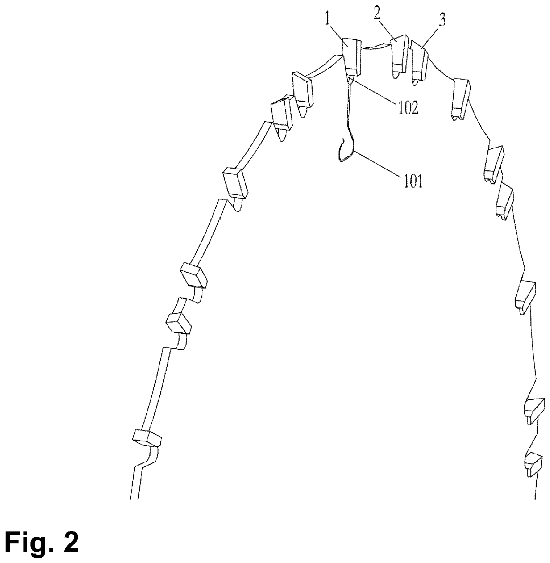

In Figur 4 zeigt das Beispiel c) die Zahnfolge der Ausführungsform des Kreissägeblattes 100 nach Figuren 1 und 2, bei dem die Gruppen I, II aus drei Zähnen 1, 2, 3 gebildet werden und aus je einem Wechselzahnpaar Z1 und einem Flachzahn 1 mit unregelmäßiger Zahnteilung bestehen. Der Zahnabstand $t_1$ innerhalb eines aus den Wechselzähnen 2, 3 gebildeten Zahnpaares Z1 ist hierbei kleiner als der Abstand $t_2$ zum Flachzahn 1 der Gruppe I. Dabei entstehen in der Zahnfolge unterschiedliche Abstände c und d zwischen den qualitätsbildenden Zähnen 1, 2, 3 wobei der qualitätsbestimmende größte Abstand c immer kleiner ist als der größte Abstand a bei einer Gruppenverzahnung mit regelmäßiger Zahnteilung (Beispiel b)).

Das Beispiel d) zeigt in Figur 4 die Zahnfolge bei dem Kreissägeblatt 100 nach Figur 3, das aus je zwei Zahnpaaren Z1, Z2 und einem Flachzahn 1 besteht, wobei die Zahnpaare Z1 aus den Wechselzähnen 2, 3 und die Zahnpaare Z2 aus den Wechselzähnen 4, 5 gebildet werden. Auch hier ist eine unregelmäßige Zahnteilung vorgesehen und die qualitätsbildenden Zähne 1 folgen in den Abständen c, e und d bzw. umgekehrt aufeinander. Der qualitätsbestimmende größte Abstand c ist auch hier immer kleiner als der größte Abstand a bei einer Gruppenverzahnung mit regelmäßiger Zahnteilung (vgl. Beispiel b)).

Geht man von gleichen Zähnezahlen eines Sägeblattes 100 aus, so sind die qualitätsbestimmenden Zahnabstände c, e, d des erfindungsgemäßen Kreissägeblattes 100 (Figur 4c, 4d) immer kleiner als der größte qualitätsbestimmende Zahnabstand a eines vergleichbaren Kreissägeblattes mit regelmäßiger Zahnteilung (Figur 4b). Bei einem erfindungsgemäßen Kreissägeblatt 100 ist folglich der größte Abstand zweier aufeinanderfolgender qualitätsbildender Zähne kleiner als bei einem vergleichbaren Kreissägeblatt mit regelmäßiger Zahnteilung, wodurch bei gleichem Anspruch an die Schnittqualität (d. h. gleichem größten Abstand aufeinanderfolgender qualitätsbildender Zähne) die Zähnezahl bei einem erfindungsgemäßen Kreissägeblatt reduziert werden kann, solange wie gilt, dass der größte qualitätsbestimmende Zahnabstand c (vgl. Figur 4c, d) kleiner oder gleich dem qualitätsbestimmenden Zahnabstand a bei regelmäßiger Zahnteilung (vgl. Figur 4a, b) ist.

Die in Figuren 1 und 3 dargestellten Teilungswinkel $\tau_c$, $\tau_d$, $\tau_e$ entsprechen in Figuren 4c, d den Abständen c, d, e.

**Bezugszeichenliste**

| | | | | |
|---|---|---|---|---|
| 1 | symmetrischer Zahn/ Flachzahn | II | | Gruppe |
| 2 | asymmetrischer Zahn/ Schrägzahn/ Wechselzahn | $\alpha_r$ | | Freiwinkel |
| 3 | asymmetrischer Zahn/ Schrägzahn/ Wechselzahn | $\beta$ | | Fasenwinkel |
| 4 | asymmetrischer Zahn/ Schrägzahn/ Wechselzahn | $\epsilon$ | | Eckwinkel |
| 5 | asymmetrischer Zahn/ Schrägzahn/ Wechselzahn | $\tau_1$ | | Teilungswinkel |
| 10 | Schneide/Schneidkante | $\tau_2$ | | Teilungswinkel |
| 11 | Ecke | $\tau_3$ | | Teilungswinkel |
| 12 | Ecke | $\tau_4$ | | Teilungswinkel |
| 13 | Zahnflanke | $\tau_5$ | | Teilungswinkel |
| 14 | Zahnflanke | a | | Abstand |
| 20 | Schneide/Schneidkante | b | | Abstand |

(fortgesetzt)

| | | | | |
|---|---|---|---|---|
| 21 | Ecke | c | Abstand |
| 22 | Ecke | d | Abstand |
| 30 | Schneide/Schneidkante | e | Abstand |
| 31 | Ecke | t | Strecke |
| 32 | Ecke | $t_1$ | Strecke |
| 40 | Schneide/Schneidkante | $t_2$ | Strecke |
| 50 | Schneide/Schneidkante | $t_3$ | Strecke |
| 60 | Fase | $t_4$ | Strecke |
| 100 | Kreissägeblatt | D | Drehrichtung/Schnittrichtung |
| 101 | Dehnschlitz | $F_B$ | Fasenbreite |
| 102 | Spanraum | R | Rotationsachse |
| I | Gruppe | S | Sägeschnitt |
| | | Z1 | Zahnpaar |
| | | Z2 | Zahnpaar |
| | | $Z_B$ | Zahnbreite |

**Patentansprüche**

1. Kreissägeblatt mit über seinem Umfang in Gruppen (I, II) angeordneten Schneidzähnen (1, 2, 3, ...) bei dem jede Gruppe (I, II) mindestens drei Schneidzähne (1, 2, 3) umfasst, von denen in Schnittfolge der erste Zahn (1) in der Vorderansicht symmetrisch und die zweiten und dritten Zähne (2, 3) wechselseitig asymmetrisch ausgebildet sind, und bei dem zwischen den Schneidkanten (10, 20) des ersten (1) und des zweiten (2) Zahnes ein erster Teilungswinkel ($\tau_1$), zwischen den Schneidkanten (20, 30) des zweiten (2) und des dritten (3) Zahnes ein zweiter Teilungswinkel ($\tau_2$) und zwischen der Schneidkante (30) des letzten Zahnes (3) einer ersten Gruppe (I) und der Schneidkante (10) des ersten Zahnes (1) einer nachfolgenden Gruppe (II) ein dritter Teilungswinkel ($\tau_3$) eingestellt ist, **dadurch gekennzeichnet, dass** die asymmetrischen Zähne (2, 3) zu einem ersten Zahnpaar (Z1) zusammengefasst sind, dass der zweite Teilungswinkel ($\tau_2$) kleiner ist als der erste Teilungswinkel ($\tau_1$), und dass der zweite Teilungswinkel ($\tau_2$) kleiner ist als der dritte Teilungswinkel ($\tau_3$).

2. Kreissägeblatt nach Anspruch 1, **dadurch gekennzeichnet, dass** jede Gruppe (I, II) mindestens ein zweites aus wechselseitig asymmetrischen Zähnen (4, 5) gebildetes Zahnpaar (Z2) aufweist.

3. Kreissägeblatt nach Anspruch 2, **dadurch gekennzeichnet, dass** ein vierter Teilungswinkel ($\tau_4$) zwischen der Schneidkante (40) des vierten (4) und der Schneidkante (50) des fünften (5) Zahnes genauso groß ist, wie der zweite Teilungswinkel ($\tau_2$) zwischen dem zweiten (2) und dritten (3) Zahn.

4. Kreissägeblatt nach Anspruch 2 oder 3, **dadurch gekennzeichnet, dass** der Teilungswinkel ($\tau_5$) zwischen der Schneidkante (30) des letzten Zahnes (3) des ersten Zahnpaares (Z1) und der Schneidkante (40) des ersten Zahnes (4) des nachfolgenden Zahnpaares (Z2) größer oder gleich groß ist als die Teilungswinkel ($\tau_2$, $\tau_4$) zwischen den Schneidkanten (20, 30, 40, 50) der Zähne (2, 3; 4, 5) eines Zahnpaares (Z1; Z2).

5. Kreissägeblatt nach einem der vorstehenden Ansprüche, **dadurch gekennzeichnet, dass** der erste Zahn (1) jeder Gruppe (I, II) als Flachzahn ausgebildet ist.

6. Kreissägeblatt nach einem der vorstehenden Ansprüche, **dadurch gekennzeichnet, dass** der erste Zahn (1) jeder Gruppe (I, II) als Hohlzahn ausgebildet ist.

7. Kreissägeblatt nach einem der vorstehenden Ansprüche, **dadurch gekennzeichnet, dass** die asymmetrischen Zähne (2, 3; 4, 5) als Hohlzähne ausgebildet sind.

8. Kreissägeblatt nach einem der Ansprüche 1 bis 6, **dadurch gekennzeichnet, dass** die Spanfläche der asymmetrischen Zähne (2, 3; 4,5) einen Achswinkel aufweist.

9. Kreissägeblatt nach einem der vorstehenden Ansprüche, **dadurch gekennzeichnet, dass** mindestens ein Zahn (1, 2, 3, 4, 5) einer Gruppe (I, II) mindestens eine Fase (60) mit einer axialen Fasenbreite ($F_B$) aufweist.

**10.** Kreissägeblatt nach Anspruch 9, **dadurch gekennzeichnet, dass** die Fasenbreite ($F_B$) maximal ein Drittel der axialen Zahnbreite ($Z_B$) beträgt.

**11.** Kreissägeblatt nach Anspruch 9 oder 10, **dadurch gekennzeichnet, dass** der Fasenwinkel ($\beta$) zwischen 0,5° und 45°, vorzugsweise zwischen 0,5° und 5° liegt.

**Claims**

**1.** Circular saw blade having cutting teeth (1, 2, 3,...) arranged in groups (I, II) over its circumference, in the case of which each group (I, II) comprises at least three cutting teeth (1, 2, 3), of which, in cutting order, the first tooth (1), as seen in front view, is of symmetrical design and the second and third teeth (2, 3) are of alternately asymmetrical design, wherein a first spacing angle ($\tau_1$) is set between the cutting edges (10, 20) of the first tooth (1) and of the second tooth (2), a second spacing angle ($\tau_2$) is set between the cutting edges (20, 30) of the second tooth (2) and of the third tooth (3), and a third spacing angle ($\tau_3$) is set between the cutting edge (30) of the final tooth (3) of a first group (I) and the cutting edge (10) of the first tooth (1) of a following group (II), **characterized in that** the asymmetrical teeth (2, 3) are combined to form a first tooth pair (Z1), **in that** the second spacing angle ($\tau_2$) is smaller than the first spacing angle ($\tau_1$), and **in that** the second spacing angle ($\tau_2$) is smaller than the third spacing angle ($\tau_3$).

**2.** Circular saw blade according to Claim 1, **characterized in that** each group (I, II) has at least one second tooth pair (Z2) formed from alternately asymmetrical teeth (4, 5).

**3.** Circular saw blade according to Claim 2, **characterized in that** a fourth spacing angle ($\tau_4$) between the cutting edge (40) of the fourth tooth (4) and the cutting edge (50) of the fifth tooth (5) is the same size as the second spacing angle ($\tau_2$) between the second tooth (2) and the third tooth (3).

**4.** Circular saw blade according to Claim 2 or 3, **characterized in that** the spacing angle ($\tau_5$) between the cutting edge (30) of the final tooth (3) of the first tooth pair (Z1) and the cutting edge (40) of the first tooth (4) of the following tooth pair (Z2) is greater than, or equal to, the spacing angles ($\tau_2$, $\tau_4$) between the cutting edges (20, 30, 40, 50) of the teeth (2, 3; 4, 5) of a tooth pair (Z1; Z2).

**5.** Circular saw blade according to one of the preceding claims, **characterized in that** the first tooth (1) of each group (I, II) is designed in the form of a flat tooth.

**6.** Circular saw blade according to one of the preceding claims, **characterized in that** the first tooth (1) of each group (I, II) is designed in the form of a hollow tooth.

**7.** Circular saw blade according to one of the preceding claims, **characterized in that** the asymmetrical teeth (2, 3; 4, 5) are designed in the form of hollow teeth.

**8.** Circular saw blade according to one of Claims 1 to 6, **characterized in that** the rake surface of the asymmetrical teeth (2, 3; 4, 5) has an axial angle.

**9.** Circular saw blade according to one of the preceding claims, **characterized in that** at least one tooth (1, 2, 3, 4, 5) of a group (I, II) has at least one chamfer (60) with an axial chamfer width ($F_B$) .

**10.** Circular saw blade according to Claim 9, **characterized in that** the chamfer width ($F_B$) is at most a third of the axial tooth width ($Z_B$).

**11.** Circular saw blade according to Claim 9 or 10, **characterized in that** the chamfer angle ($\beta$) is between 0.5° and 45°, preferably between 0.5° and 5°.

**Revendications**

**1.** Lame de scie circulaire comportant des dents de coupe (1, 2, 3, ...) disposées en groupes (I, II) sur sa périphérie, dans laquelle chaque groupe (I, II) comprend au moins trois dents de coupe (1, 2, 3) dont, en succession de coupe, la première dent (1) est réalisée symétrique en vue de devant, et dont la seconde dent et la troisième dent (2, 3) sont réalisées asymétriques en alternance, et un premier angle de pas ($\tau_1$) est réglé entre les arêtes de coupe (10, 20) de la première dent (1) et de la seconde dent (2), un second angle de pas ($\tau_2$) est réglé entre les arêtes de coupe (20, 30) de la seconde dent (2) et de la troisième dent (3), et un troisième angle de pas ($\tau_3$) est réglé entre l'arête de coupe (30) de la dernière dent (3) d'un premier groupe (I) et l'arête de coupe (10) de la première dent (1) d'un groupe suivant (II), **caractérisée en ce que** les dents asymétriques (2, 3) sont réunies en une première paire de dents (Z1), **en ce que** le second angle de pas ($\tau_2$) est plus petit que le premier angle de pas ($\tau_1$) et **en ce que** le second angle de pas ($\tau_2$) est plus petit que le troisième angle de pas ($\tau_3$).

2. Lame de scie circulaire selon la revendication 1, **caractérisée en ce que** chaque groupe (I, II) présente au moins une seconde paire de dents (Z2) formées par des dents (4, 5) asymétriques en alternance.

3. Lame de scie circulaire selon la revendication 2, **caractérisée en ce que** un quatrième angle de pas ($\tau_4$) entre l'arête de coupe (40) de la quatrième dent (4) et l'arête de coupe (50) de la cinquième dent (5) est aussi grand que le second angle de pas ($\tau_2$) entre la seconde dent (2) et la troisième dent (3).

4. Lame de scie circulaire selon la revendication 2 ou 3, **caractérisée en ce que** l'angle de pas ($\tau_5$) entre l'arête de coupe (30) de la dernière dent (3) de la première paire de dents (Z1) et l'arête de coupe (40) de la première dent (4) de la paire de dents suivante (Z2) est supérieur ou égal aux angles de pas ($\tau_2$, $\tau_4$) entre les arêtes de coupe (20, 30, 40, 50) des dents (2, 3 ; 4, 5) d'une paire de dents (Z1 ; Z2).

5. Lame de scie circulaire selon l'une des revendications précédentes, **caractérisée en ce que** la première dent (1) de chaque groupe (I, II) est réalisée sous forme de dent plate.

6. Lame de scie circulaire selon l'une des revendications précédentes, **caractérisée en ce que** la première dent (1) de chaque groupe (I, II) est réalisée sous forme de dent creuse.

7. Lame de scie circulaire selon l'une des revendications précédentes, **caractérisée en ce que** les dents asymétriques (2, 3 ; 4, 5) sont réalisées sous forme de dents creuses.

8. Lame de scie circulaire selon l'une des revendications 1 à 6, **caractérisée en ce que** la face de coupe des dents asymétriques (2, 3 ; 4, 5) présente un angle par rapport à l'axe.

9. Lame de scie circulaire selon l'une des revendications précédentes, **caractérisée en ce que** au moins une dent (1, 2, 3, 4, 5) d'un groupe (I, II) présente au moins un chanfrein (60) ayant une largeur axiale ($F_B$).

10. Lame de scie circulaire selon la revendication 9, **caractérisée en ce que** la largeur de chanfrein ($F_B$) est au maximum d'un tiers de la largeur axiale ($Z_B$) de la dent.

11. Lame de scie circulaire selon la revendication 9 ou 10, **caractérisée en ce que** l'angle de chanfrein ($\beta$) est compris entre 0,5° et 45°, de préférence entre 0,5° et 5°.

**Fig. 1**

Fig. 2

**Fig. 3**

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20021919 U1
- DE 20121039 U1
- US 20080257127 A1
- DE 202013102004 U1